# EUROPEAN PATENT SPECIFICATION

(11) **EP 0 690 440 B1**
(45) Date of publication and mention of the grant of the patent: **26.08.1998**
(21) Application number: 95114092.0
(22) Date of filing: 15.10.1990
(51) Int. Cl.: G11B 5/48, G11B 5/55

(54) **Bearing plate arrangement for supporting the rotary actuator of a disk drive**
Trägerplattenanordnung für Drehpositioniersystem in einem Plattenantrieb
Agencement de plaque support d'un actionneur rotatif pour un entraînement de disque

(30) Priority: 15.12.1989 US 451200
(43) Date of publication of application: 03.01.1996
(62) Divisional of application: 90311255.5
(73) Proprietor: SEAGATE TECHNOLOGY INTERNATIONAL, Georgetown Grand Cayman Island (KY)
(72) Inventor: Goss, Lloyd C., Bloomington, Minnesota 55428 (US)
(74) Representative: Kenyon, Sarah Elizabeth

(56) References cited:
- EP-A- 0 089 715
- EP-A- 0 223 610
- EP-A- 0 334 487
- US-A- 4 713 703
- PATENT ABSTRACTS OF JAPAN vol. 13 no. 403 (P-929) ,7 September 1989 & JP-A-01 146173 (NEC) 8 June 1989,
- PATENT ABSTRACTS OF JAPAN vol. 4 no. 115 (P-023) ,16 August 1980 & JP-A-55 070973 (NEC) 28 May 1980,

## Description

The present invention relates to a bearing plate arrangement for supporting the rotary actuator of a disk drive. More particularly, the present invention relates to a pair of bearing plates for rotatably supporting an actuator shaft of a rotary actuator which in use controllably positions at least one magnetic transducing head, the or each head being disposed at one end of a respective transducer support arm, and the or each arm at the other end thereof being mounted on the actuator shaft. The present invention also relates to a rotary actuator for controllably positing a magnetic transducing head with respect to a magnetic disk rotatably mounted in a disk drive, the rotary actuator including the aforesaid pair of bearing plates.

Magnetic disk drive devices generally employ either linear or rotary actuators to position magnetic reading and recording heads with respect to rotatable magnetic disks. Such heads are typically moved at least generally radially of the disks in order to locate a head proximate a desired track on the disks.

Rotary actuators usually include a shaft mounted rotatably on the deck (or other stationary housing portion of the drive) by two bearing plates, along with an arm or group of stacked arms connected to the shaft for pivoting with the shaft. A magnetic transducing head is mounted at the end of each arm remote from the shaft, and thus is carried in an arcuate path as the shaft pivots. Usually, multiple head support arms are mounted on the shaft in stacked relation, for rotation in concert with the shaft.

The prevailing means for controllably pivoting the head arm assembly is an electric motor including a voice coil and permanent magnets. Typically, the voice coil is a flat loop extending perpendicular to the shaft pivot axis, connected to the shaft for pivoting with the shaft. The permanent magnets are then integral with the disk drive housing, positioned in spaced apart relation to the voice coil and on opposite sides of the coil. When electrical current is directed through the wire of the voice coil, a magnetic field is generated which inter-acts with the magnetic field of the permanent magnets to provide the force which moves the voice coil and rotates the shaft as well.

This orientation of the voice coil, however, gives rise to a problem in that only the radially outward portion of the voice coil has a desirably long moment arm, i.e. distance from the pivot axis. The radially inward portions of the coil have shorter effective moment arms, and thus provide correspondingly reduced rotational force on the shaft and head arm assembly. Of course, this difficulty can be counter-acted to some extent by increasing the size of the voice coil, yet such a "solution" runs contrary to the continuing trend towards smaller and more compact disk drive components, including rotary actuators. Large voice coils further are a disadvantage in that they add to the inertia of the shaft and head arm assembly, resulting in a head arm assembly which cannot be accelerated and decelerated as rapidly as desired, or conversely require increased power to accelerate and decelerate the assembly.

Another challenge associated with rotary actuators is the desire to employ light weight materials, e.g. aluminium, to the extent possible further to reduce inertia of the head arm assembly, as well as reducing overall weight. At the same time, other necessary structures, e.g. flux carrying bodies constructed of steel, have different thermal expansion coefficients and thus raise the potential for distortion due to the varying thermal coefficients of contiguous structures in the actuator. In JP-A-1146173 reflecting the preamble of the independent claims, this problem of distortion due to varying thermal coefficients, ie thermal off track, is partially addressed for an arm for mounting a magnetic head, the arm being rotably mounted on a shaft. To reduce thermal off track, the shaft is supported by a sleeve made from the same material as the shaft.

According to one aspect of the present invention, there is provided a pair of bearing plates for rotatably supporting an actuator shaft of a rotary actuator which in use controllably positions at least one magnetic transducing head, the or each head disposed at one end of a respective transducer support arm, the or each arm at the other end being mounted on said actuator shaft, characterised in that one of the bearing plates is elastically deformed in a direction away from the other of the bearing plates to provide a restoring force for locating the pivot shaft.

Such an arrangement of bearing plates may secure the actuator shaft position.

In the preferred embodiment described below, the means for supporting the actuator shaft include first and second transverse bearing plates spaced apart from one another, and first and second bearings supported in the first and second bearing plates, respectively, for receiving opposite ends of the shaft. One of the bearing plates may incorporate a parallelogram flexure providing means for axially pre-loading the pair of bearings. This axial pre-load secures the shaft position. The bearing plates may be secured substantially rigid spacing means for maintaining their spaced relationship. Biasing means, mounted on the spacing means, may then contact the flexible bearing plate and provide a bias to move that plate longitudinally away from the other.

Preferably, such biasing means comprise a pair of leaf springs in contact with the flexible bearing plate. The leaf springs provide a biasing force in a direction axially pre-loading the bearings away from each other. This compensates for thermal expansion effects if aluminium is used in the bearing plates contiguous with pole pieces of a low carbon steel for transfer of magnetic flux. This thermal compensation structure enables the use of fixed races in the bearings for more reliable mounting of the pivot shaft.

To provide the parallelogram flexure, a portion of the bearing plate contacting the leaf springs may be cut away to form parallel flexure means or load beams. Performance may be enhanced further by the insertion of damping material between the flexure load beams.

According to another aspect of the present invention there is provided a rotary actuator for controllably positioning a magnetic transducing head with respect to a magnetic disk rotatably mounted in a disk drive, the rotary actuator having a head arm assembly comprising a pivot shaft, and a stationary portion comprising means for rotatably supporting the pivot shaft, the supporting means includes first and second longitudinally spaced bearing plates and first and second bearings supported by the first and second bearing plates, respectively, characterised in that one of the bearing plates being elastically deformed in a direction away from the other of the bearing plates to provide a restoring force for locating the pivot shaft.

Preferably, the stationary portion includes a permanent magnet, the head arm assembly includes an electrically conductive voice coil arranged so as to cooperate for rotating the head arm assembly relative to the stationary portioin for positioning with respect to the disk at least one magnetic transducing head in use, the permanent magnet has a magnet face extending parallel to and in an arc about the longitudinal axis, and the electrically conductive voice coil defines a longitudinally extending surface, which is curved to conform with the magnet face, the electrically conductive voice coil having a thickness in the radial direction which is substantially less than its dimension in the longitudinal and circumferential directions.

Thus, the voice coil may be located at a substantially constant radial separation from the longitudinal axis and so may provide a more effective rotational force in use than is the case in the prior art.

Further, since the thickness of the coil may be substantially less than its other dimensions, rapid dissipation of heat from the voice coil can be obtained.

The voice coil may also be given a reduced mass for reduced inertia of the head arm assembly at no reduction in available power to accelerate and decelerate the head arm assembly.

The present invention may be applicable to a disk drive having a stationary frame, a data storage disk mounted rotatably relative to the frame, a magnetic transducing head for storing data onto the disk and for retrieving data previously stored onto the disk, and a rotary actuator for controllably positioning the transducing head relative to the disk.

In the preferred embodiment described below, the rotary actuator includes a longitudinally extending shaft, and means for rotatably supporting the shaft with respect to the stationary frame. A plurality of transducer support arms are integrally mounted on the shaft for rotation with the shaft, and extend away from the shaft in a first radial direction. At least one magnetic transducing head is mounted on each support arm and at an end portion thereof remote from the shaft for travel in an arcuate path as the shaft rotates. A permanent magnet is fixedly mounted n the stationary frame and spaced apart from the shaft. The magnet has a concave magnet face directed towards the shaft and curved about the longitudinal axis. A coil support is integrally mounted on the shaft and extends away from the shaft in a second radial direction. An electrically conductive voice coil is mounted on the coil support for arcuate travel above the longitudinal axis as the shaft rotates. The coil has a substantially uniform thickness in the radial direction, and is curved about the longitudinal axis to conform to the curvature of the magnet face. The coil is disposed radially inwardly of the magnet face, and has a longitudinal dimension and a width, each of which is at least five times its thickness.

Preferably, the coil is formed from a single aluminium wire, with the thickness of the coil being determined by the diameter of the wire. The coil may have a generally rectangular form, including a pair of opposed longitudinal side portions and a pair of opposed arcuate end portions, combining to form a thin rectangular frame.

Because the radial dimension of the coil is determined by its relatively small thickness, substantially all of the coil has the same moment or lever arm, i.e. is at the same distance from the pivot axis. This arrangement enhances the performance of the rotary actuator in achieving more consistent and reliable performance, and also in providing the desired level of force to rotate the head arm assembly with a coil substantially smaller in size as compared with a conventional coil whose major dimension is in the radial direction. The smaller coil reduces the inertia of the assembly for more rapid acceleration and deceleration, leading to reduced time for gaining access to particular data tracks on disks, lower power requirements, or both. This arrangement further requires only about half the permanent magnet volume required in connection with a perpendicular or radially disposed coil.

Thus, a thin voice coil, with is major dimensions perpendicular to the radial direction, can be provided in a substantially reduced size and yet still give the same level of force to accelerate and decelerate the head arm assembly. This thin (rather than bobbin) structure promotes rapid head dissipation from the coil. The reduced size coil lowers the inertia of the head arm assembly, thus further reducing power requirements.

The invention is described further, by way of example, with reference to the accompanying drawings, in which:-
Figure 1 is a top plan view of a magnetic disk drive including a rotary actuator constructed in accordance with the present invention;
Figure 2 is a perspective view of the actuator assembly;
Figure 3 is a perspective view of the actuator assembly with a pivot shaft and head arm assembly removed;
Figure 4 is a perspective view of the pivot shaft and head arm assembly;
Figure 5 is a perspective view of a voice coil of a head arm assembly; and
Figure 6 is a top plan view of portions of the actuator assembly.

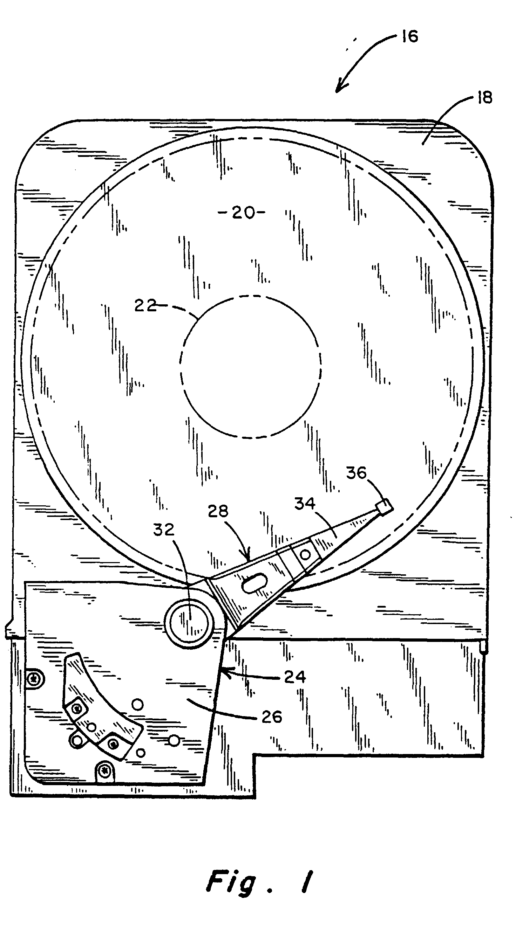

In Figure 1, there is shown a magnetic disk drive 16 including a deck 18 which is part of a stationary framework or housing for the disk drive. A stack of magnetic data storage disks, the top one being shown at 20, is rotatably mounted relative to the deck through a spindle 22. Also mounted on the deck 18 is a rotary actuator assembly 24, including a portion 26 which is fixed to the deck and a head arm assembly 28 which is movable relative to the deck. More particularly, the head arm assembly 28 can be pivoted with respect to the deck about a longitudinal axis 30 of a longitudinal (i.e. vertical) actuator shaft 32. The head arm assembly includes a stack of multiple transducer support arms, the top one being shown at 34. A magnetic transducing head 36 is supported at the free end of the arm 34, remote from the actuator shaft, whereby the transducing head 36 traverses an arcuate path as the shaft 32 pivots.

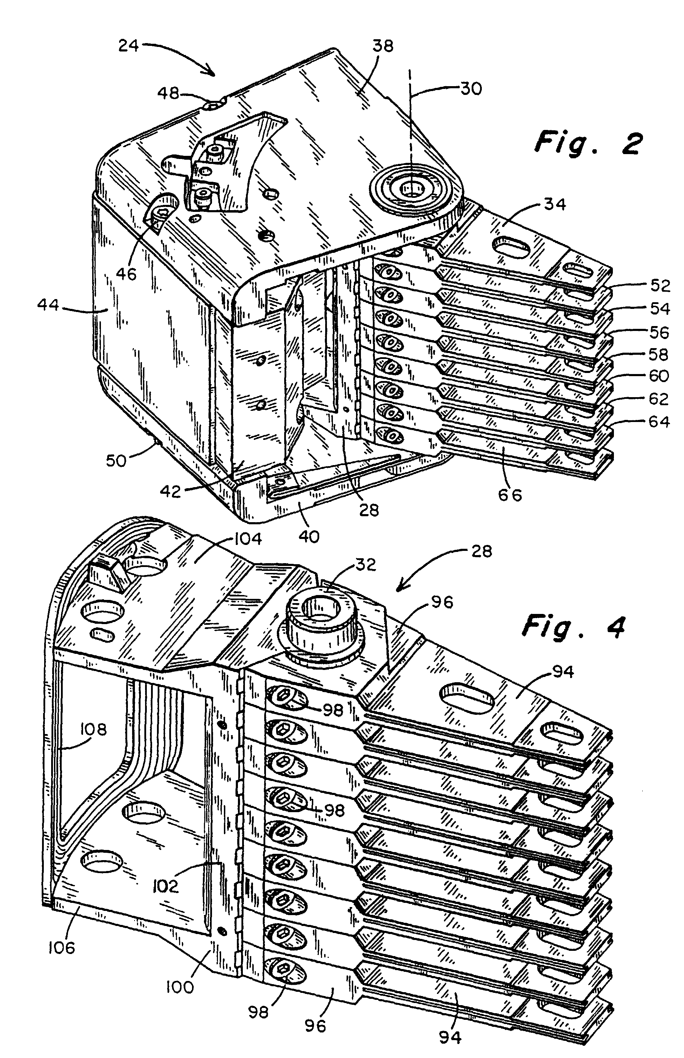

Figure 2 shows the actuator assembly 24 removed from the disk drive. The fixed or stationary portion of the actuator assembly includes a pair of generally transverse or horizontal bearing plates constructed of aluminium, in particular an upper bearing plate 38, and a lower bearing plate 40 secured to the deck 18. An aluminium pole piece support bracket 42 is secured to the bearing plates 38 and 40. The bearing plates are also secured to a pole piece 44, e.g. by fasteners 46, 48 and 50. The pole piece is preferably constructed of a low carbon steel, and acts as a spacer to maintain the separation between the bearing plates.

The head arm assembly 28 includes a plurality of the transducer support arms 52 to 66 along with the top arm 34, all integral with the actuator shaft 32 and thus rotatable in concert as the shaft pivots.

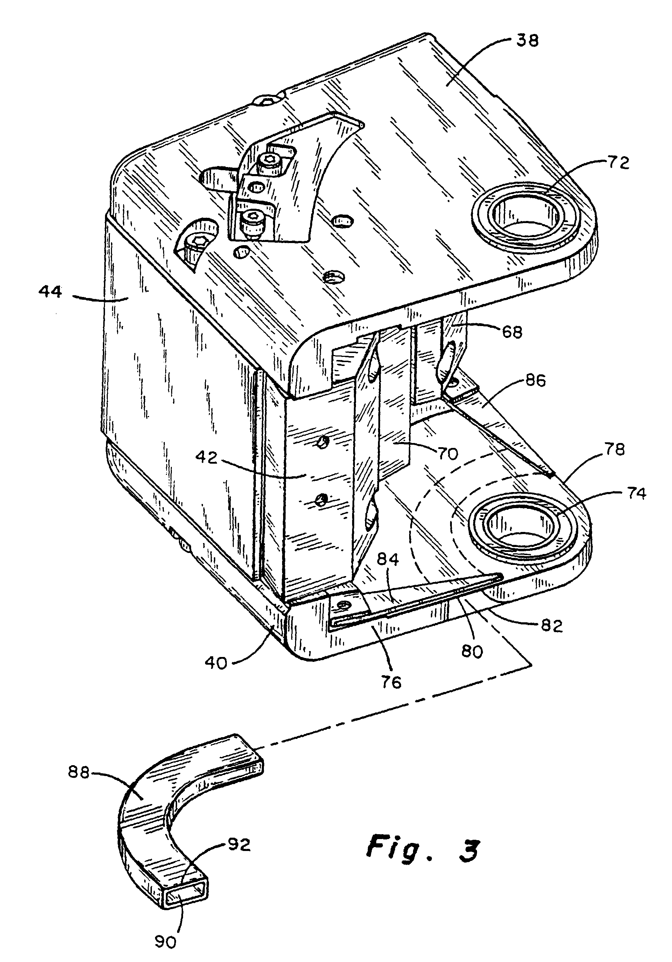

In Figure 3, the head arm assembly is removed from the remainder of the actuator assembly 24, to reveal a pole piece support bracket 68 which co-operates with the bracket 42 in determining the location of a pole piece 70 situated between the brackets.

Upper and lower bearings 72 and 74 are supported by the bearing plates 38 and 40, respectively, and support opposite ends of the actuator pivot shaft 32 to enable shaft rotation. The vertical or longitudinal separation of the bearings 72 and 74 is pre-determined with respect to the actuator shaft length such that the bearing plate of one of the bearings is at least slightly elastically deformed when the shaft 32 is supported between the plates. Biasing springs 84 and 86 provide the main axial bearing pre-load. Thus, the bearings provide a restoring force which secures the actuator shaft position.

Races of the bearings 72 and 74 are fixed. This, in combination with the simultaneous use of aluminium and low carbon steel as noted above, creates a need for thermal compensation, in particular due to the different thermal expansion co-efficients for aluminium and low carbon steel. To this end, an arcuate cut out is formed in the bearing plate 40 from a side edge 76 to another side edge 78 as indicated by broken lines, forming upper and lower parallel flexure members or load beams 80 and 82. A leaf spring 84 is secured to the bracket 42 and is pre-loaded to provide a downward bias to the bearing plate 40 along the edge 76. Likewise, a leaf spring 86, mounted on the bracket 68, downwardly biases the bearing plate along the edge 78. In combination, the leaf springs 84 and 86 together with the load beams 80 and 82 compensate for the thermal mismatch, and impart excellent thermal performance characteristics to the rotary actuator.

To overcome undesirable resonance effects, an arcuate damping member 88 having an aluminium core 90 surrounded by a visco-elastic damping layer 92 is inserted into the arcuate opening between the load beams 80 and 82.

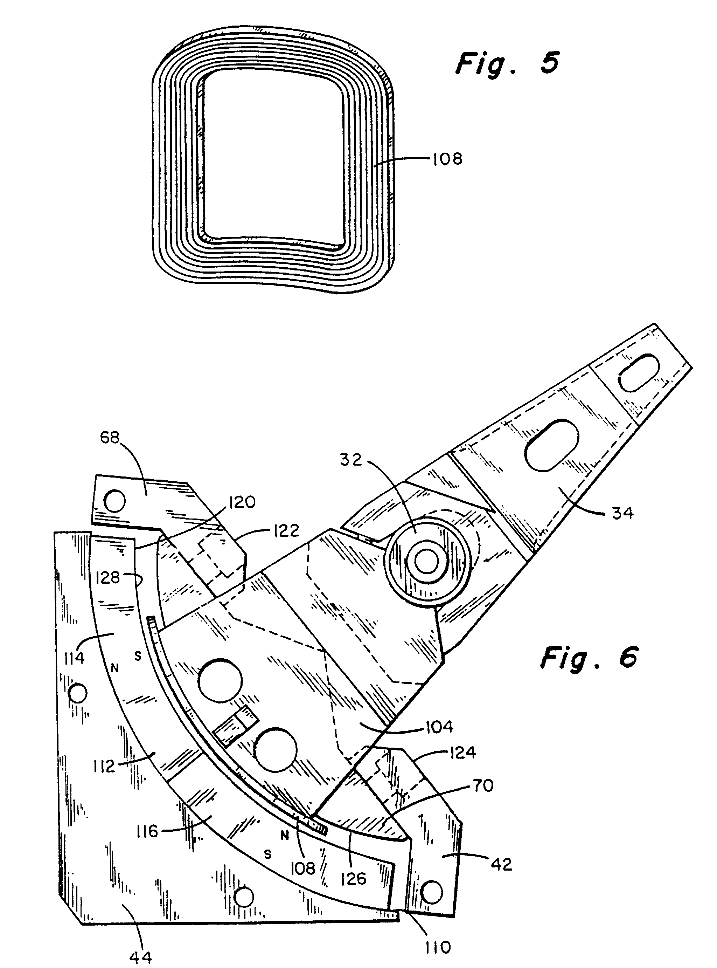

The head arm assembly is illustrated in Figure 4. The transducer support arms 34 and 52 to 66 are substantially identical. The arm 34, for example, includes a relatively thin tapered portion 94 extending radially of a relatively thick base 96. A fastener 98, and a similar fastener on the other side and thus not visible in the Figure, secure the base 96 to a voice coil carrying frame 100. The arms 52 to 66 similarly include tapered extensions and bases, likewise secured to the coil carrying frame. With the actuator pivot shaft 32 positioned between the bases and an upright support portion 102 of the frame, fasteners 98 secure the arms and the frame integrally to the actuator pivot shaft. Upper and lower flanges 104 and 106 of the frame 100 extend radially away from the shaft 32, in a direction opposite to that of the arm extension, thus to counter-balance the transducer support arms. A voice coil 108 is secured at its upper and lower end portions to the flanges 104 and 106, and thus traverses an arcuate path when the shaft 32 pivots. Preferably, the entire assembly including the shaft 32, the arms, the frame 100 and the voice coil 108, is constructed of aluminium. This reduces the differential thermal expansion of this assembly, enabling more accurate location of the recording heads with respect to the magnetic tracks located on the disk.

As seen in Figure 5, the voice coil 108 forms a thin, rectangular frame. The voice coil is generally flat, but more precisely is curved about the longitudinal axis 30. The rectangular frame is formed of multiple windings (preferably over one hundred) of an aluminium wire of rectangular cross section. The windings themselves form the rectangular frame, there being no core about which the wire is wound, for example as in the well known bobbin approach.

The longitudinal dimension and the width (or arcuate) dimension of the voice coil 108 are preferably an order of magnitude greater than the coil thickness, and in any event are at least five times the thickness. As a result, the voice coil 108 can be considered as contained within a thin wall of a circular upright cylinder, concentric with the axis 30, with the moment or lever arm of the coil being equal to the cylinder radius. Accordingly, virtually the entire voice coil has the same moment or lever arm. With the wire winding alone forming the coil (no core), the voice coil 108 can be as thin as the wire dimensions, and have longitudinal and arcuate dimensions determined by the number of turns.

As seen in Figure 6, the pole piece 44 includes a radially inner surface 110 curved about the axis 30. A permanent magnet assembly 112, including magnets 114 and 116, is secured to the pole piece 44. Magnets 114 and 116 are arcuate, and curved about the pivot axis and thus conform to the surface 110 of the pole piece 44. This facilitates mounting of the magnets 114 and 116 to the pole piece, with radially outer faces of the magnets contiguous with the surface 110. A radially inner surface 120 of the magnet assembly likewise is curved about the pivot axis.

The pole piece 70, serving as a radially inner pole piece, is fixed with respect to the deck 18, situated between and spaced apart from the flanges 104 and 106 to permit movement of the head arm assembly. More particularly, fasteners as indicated at 122 and 124 secure the pole piece 70 to brackets 42 and 68. A radially outer surface 126 of the pole piece 70 is curved about the longitudinal axis, and thus cooperates with the surface 120 of the magnet assembly 112 to form an arcuate, longitudinal air gap 128 between the magnet and the radially inner pole piece. The coil 108 is situated within the air gap 128, preferably being radially centered.

The rotary actuator 24 functions in a well known manner. When electric current is supplied to the voice coil 108, a magnetic field is generated about the voice coil that inter-acts with the magnetic field about the permanent magnet assembly 112. The force of the interacting magnetic fields moves the voice coil 108 relative to the permanent magnet assembly, thus to pivot the shaft 32 and the head arm assembly, which in turn moves the magnetic transducing head 36 and the remaining heads in arcuate paths. Thus, each of the transducing heads is movable generally radially of an associated one of the magnetic disks, which, in combination with disk rotation, enables the selected head positioning necessary for recording and retrieving data.

As compared with a conventional horizontal voice coil orientation, the vertical flat coil substantially reduces the time required for acceleration and deceleration of the head arm assembly through reduced actuator inertia, requires less power, and substantially reduces voice coil temperature due to markedly improved heat dissipation. This approach has been found to reduce the required permanent magnet volume by nearly fifty percent. Further reduction in inertia results from the use of aluminium throughout the head assembly and for much of the remainder of the actuator assembly. Fixed race ball bearings can be employed to secure the pivot shaft, in spite of the different materials involved, due to the leaf springs and parallel load beams, which compensate for differences in thermal expansion co-efficients.

## Claims

1. A transducing head actuator supporting device comprising a pair of bearing plates (72, 74) for rotatably supporting an actuator shaft (32) of a rotary actuator which in use controllably positions at least one magnetic transducing head (36), the or each head disposed at one end of a respective transducer support arm (34, 52 to 66), the or each arm at the other end being mounted on said actuator shaft, characterised in that one of the bearing plates is elastically deformed in a direction away from the other of the bearing plates to provide a restoring force for locating the pivot shaft.

2. A supporting device as claimed in claim 1, further comprising biasing means (84, 86) for biasing at least one of the bearing plates in a direction away from the other of the bearing plates.

3. A supporting device as claimed in claim 1 or 2, wherein one of the bearing plates comprises first and second parallel flexure members (80, 82) defining an arcuate opening through said bearing plate, and an arcuate damping member (88) within the arcuate opening.

4. A supporting device according to claim 3, wherein the arcuate damping member (88) has an aluminium core (90) surrounded by a viscoelastic damping layer (92).

5. A supporting device according to any one of the preceding claims, wherein the bearing plates are constructed of aluminium.

6. A rotary actuator for controllably positioning a magnetic transducing head (36) with respect to a magnetic disk (20) rotatably mounted in a disk drive (16), the rotary actuator having a head arm assembly comprising a pivot shaft (32), and a stationary portion comprising means (38, 40, 72, 74) for rotatably supporting the pivot shaft,
the supporting means including first and second longitudinally spaced bearing plates (38, 40) and first and second bearings (72, 74) supported by the first and second bearing plates, respectively, characterised in that one of the bearing plates is elastically deformed in a direction away from the other of the bearing plates to provide a restoring force for locating the pivot shaft.

7. A rotary actuator according to claim 6, wherein the first and second bearing plates (38, 40) are spaced apart such that at least one of the bearing plates is elastically deformed by the pivot shaft (32) supported between the plates.

8. A rotary actuator according to claim 6 or 7, wherein the stationary portion includes a permanent magnet (114, 116), the head arm assembly includes an electrically conductive voice coil (108) arranged so as to cooperate for rotating the head arm assembly relative to the stationary portioin for positioning with respect to the disk at least one magnetic transducing head in use, the permanent magnet has a magnet face (120) extending parallel to and in an arc about the longitudinal axis, and the electrically conductive voice coil defines a longitudinally extending surface, which is curved to conform with the magnet face, the electrically conductive voice coil having a thickness in the radial direction which is substantially less than its dimension in the longitudinal and circumferential directions.

9. A rotary actuator according to claim 8, wherein the dimensions of the electrically conductive voice coil (108) in the longitudinal and circumferential directions are each at least five times its thickness.

10. A rotary actuator according to claim 6, 7, 8 or 9, wherein the bearing plates (38, 40) are spaced apart by a member (44) having a different thermal expansion coefficient to that of the bearing plates.

## Patentansprüche

1. Halterungsvorrichtung für ein Wandlerkopf-Stellglied, mit zwei Lagerplatten (72,74) zur drehbaren Lagerung einer Stellgliedwelle (32) eines Drehstellgliedes, das im Betrieb in steuerbarer Weise zumindest einen magnetischen Wandlerkopf (36) positioniert, wobei der oder jeder Kopf an einem Ende eines jeweiligen Wandler-Tragarmes (34,52-66) angeordnet ist, wobei der oder jeder Arm am anderen Ende an der Stellgliedwelle befestigt ist,
dadurch gekennzeichnet, daß eine der Lagerplatten in einer Richtung von der anderen Lagerplatte fort elastisch verformt wird, um eine Rückstellkraft zur Festlegung der Lage der Schwenkwelle zu schaffen.

2. Halterungsvorrichtung nach Anspruch 1, die weiterhin Vorspanneinrichtungen (84,86) zur Vorspannung zumindest einer der Lagerplatten in einer Richtung von der anderen der Lagerplatten fort umfaßt.

3. Halterungsvorrichtung nach Anspruch 1 oder 2, bei der eine der Lagerplatten erste und zweite parallele Biegeelemente (80,82), die eine bogenförmige Öffnung durch die Lagerplatte bilden, und ein bogenförmiges Dämpfungselement (88) innerhalb der bogenförmigen Öffnung umfaßt.

4. Halterungsvorrichtung nach Anspruch 3, bei der das bogenförmige Dämpfungselement (88) einen Aluminiumkern (90) aufweist, der von einer viskoelastischen Dämpfungsschicht (92) umgeben ist.

5. Halterungsvorrichtung nach einem der vorhergehenden Ansprüche, bei der die Lagerplatten aus Aluminium hergestellt sind.

6. Drehstellglied zur steuerbaren Positionierung eines magnetischen Wandlerkopfes (36) bezüglich einer Magnetplatte (20), die drehbar in einem Plattenlaufwerk (16) befestigt ist, wobei das Drehstellglied eine Kopf-Armbaugruppe mit einer Schwenkwelle (32) und einen stationären Teil aufweist, der Einrichtungen (38, 40, 72,74) zur drehbaren Laegerung der Schwenkwelle aufweist,
wobei die Lagerungseinrichtung erste und zweite mit Längsabstand angeordnete Lagerplatten (38,40) und erste und zweite Lager (72,74) einschließt, die von der ersten bzw. zweiten Lagerplatte gehaltert werden,
dadurch gekennzeichnet, daß eine der Lagerplatten elastisch in einer Richtung von der anderen der Lagerplatten fort verformt ist, um eine Rückstellkraft zur Festlegung der Lage der Schwenkwelle zu liefern.

7. Drehstellglied nach Anspruch 6, bei dem die ersten und zweiten Lagerplatten (38,40) mit einem derartigen Abstand voneinander angeordnet sind, daß zumindest eine der Lagerplatten von der zwischen den Platten gelagerten Schwenkwelle (32) elastisch verformt wird.

8. Drehstellglied nach Anspruch 6 oder 7, bei dem der stationäre Teil einen Permanentmagneten (114,116) einschließt, bei dem die Kopf-Armbaugruppe eine elektrisch leitende Schwingspule (108) einschließt, die so angeordnet ist, daß sie für eine Drehung der Kopf-Armbaugruppe gegenüber dem stationären Teil zusammenwirkt, um im Betrieb zumindest einen magnetischen Wandlerkopf gegenüber der Platte zu positionieren, bei dem der Permanentmagnet eine Magnetstirnfläche 120 aufweist, die sich parallel zu der Längsachse und auf einem Bogen um diese erstreckt, und bei dem die elektrisch leitende Schwingspule eine sich in Längsrichtung erstreckende Oberfläche bildet, die gekrümmt ist, um hinsichtlich ihrer Form mit der Magnetstirnfläche übereinzustimmen, wobei die elektrisch leitende Schwingspule eine Dicke in der Radialrichtung aufweist, die wesentlich kleiner als ihre Abmessung in den Längs- und Umfangsrichtungen ist.

9. Drehstellglied nach Anspruch 8, bei dem die Abmessungen der elektrisch leitenden Schwingspule (108) in Längs- und Umfangsrichtung zumindest dem fünffachen ihrer Dicke entsprechen.

10. Drehstellglied nach einem der Ansprüche 6, 7, 8 oder 9, bei dem die Lagerplatten (38,40) durch ein Teil (44) in Abstand gehalten werden, das einen anderen thermischen Ausdehnungskoeffizienten als die Lagerplatten aufweist.

## Revendications

1. Dispositif de support d'un dispositif de commande de tête de transducteur comprenant une paire de plaques d'appui (72, 74) permettant de supporter de manière rotative un axe de dispositif de commande (32) d'un dispositif de commande rotatif qui, en fonctionnement, positionne de manière contrôlable au moins une tête de transducteur magnétique (36), la tête ou chacune des têtes étant disposée à l'une des extrémités d'un bras de soutien respectif de transducteur (34, 52 à 66), le bras ou chacun des bras de l'autre extrémité étant monté sur ledit axe de dispositif de commande, caractérisé en ce que l'une des plaques d'appui est déformée de manière élastique dans une direction s'écartant de l'autre plaque d'appui afin de fournir une force de rappel permettant de localiser l'axe pivotant.

2. Dispositif de support d'un dispositif de commande de tête de transducteur selon la revendication 1, comprenant en outre des moyens d'inclinaison (84, 86) permettant d'incliner au moins l'une des plaques d'appui dans une direction s'écartant de l'autre plaque d'appui.

3. Dispositif de support d'un dispositif de commande de tête de transducteur selon la revendication 1 ou 2, dans lequel l'une des plaques d'appui comprend des premier et second membres flexibles parallèles (80, 82) définissant une ouverture en forme d'arc à travers ladite plaque d'appui, et un élément d'amortissement en forme d'arc (88) situé à l'intérieur de l'ouverture arquée.

4. Dispositif de support d'un dispositif de commande de tête de transducteur selon la revendication 3, dans lequel l'élément d'amortissement en forme d'arc (88) est doté d'un noyau en aluminium (90) entouré d'une couche d'amortissement viscoélastique (92).

5. Dispositif de support d'un dispositif de commande de tête de transducteur selon l'une quelconque des revendications précédentes, dans lequel les plaques d'appui sont réalisées en aluminium.

6. Dispositif de commande rotatif permettant de positionner de manière contrôlable une tête de transducteur magnétique (36) par rapport à un disque magnétique (20) monté de manière rotative dans un lecteur de disque (16), le dispositif de commande rotatif étant doté d'un assemblage de bras de tête comprenant un axe pivotant (32) et une partie stationnaire comprenant des moyens (38, 40, 72, 74) permettant de soutenir de manière rotative l'axe pivotant,
les moyens de soutien comprenant des première et seconde plaques d'appui (38, 40) espacées longitudinalement et des premier et second supports (72, 74) soutenus par les première et seconde plaques d'appui, respectivement,
caractérisé en ce que l'une des plaques d'appui est déformée de manière élastique dans une direction s'écartant de l'autre plaque d'appui afin de fournir une force de rappel permettant de localiser l'axe pivotant.

7. Dispositif de commande rotatif selon la revendication 6, dans lequel les première et seconde plaques d'appui (38, 40) sont espacées de telle façon qu'au moins l'une des plaques d'appui est déformée de manière élastique par l'axe pivotant (32) maintenu entre les plaques.

8. Dispositif de commande rotatif selon la revendication 6 ou 7, dans lequel la partie stationnaire comprend un aimant permanent (114, 116), l'assemblage de bras de tête comprend une bobine mobile électriquement conductrice (108) disposée de manière à coopérer pour faire tourner l'assemblage de bras de tête par rapport à la partie stationnaire pour un positionnement par rapport à au moins une tête de transducteur magnétique du disque en utilisation, l'aimant permanent est doté d'une face magnétique (120) s'étendant parallèlement et en forme d'arc autour de l'axe longitudinal, et la bobine mobile électriquement conductrice définit une surface s'étendant longitudinalement et se courbant pour s'adapter à la face magnétique, la bobine mobile électriquement conductrice ayant une épaisseur, en direction radiale, substantiellement inférieure à sa dimension dans les directions longitudinale et circonférentielle.

9. Dispositif de commande rotatif selon la revendication 8, dans lequel les dimensions de la bobine mobile électriquement conductrice (108), dans les directions longitudinale et circonférentielle, font chacune au moins cinq fois son épaisseur.

10. Dispositif de commande rotatif selon l'une des revendications 6, 7, 8 ou 9, dans lequel les plaques d'appui (38, 40) sont espacées par un élément (44) ayant un coefficient d'expansion thermique différent de celui des plaques d'appui.
